# EUROPÄISCHE PATENTSCHRIFT

(11) **EP 0 276 358 B1**
(45) Veröffentlichungstag und Bekanntmachung des Hinweises auf die Patenterteilung: **10.02.1993**
(21) Anmeldenummer: 87109024.7
(22) Anmeldetag: 23.06.1987
(51) Int. Cl.: B27D 5/00, B29C 63/00

(54) **Kantenanleimmaschine**
Apparatus for applying type to edges
Dispositif de collage de bordures

(30) Priorität: 26.01.1987 DE 3702154
(43) Veröffentlichungstag der Anmeldung: 03.08.1988
(73) Patentinhaber: IMA-Norte Maschinenfabriken Klessmann GmbH & Co., D-33334 Gütersloh (DE)
(72) Erfinder: Riesmeier, Wilhelm, D-4990 Lübbecke 1 (DE); Rose, Martin, D-4992 Espelkamp (DE)
(74) Vertreter: Elbertzhagen, Otto

(56) Entgegenhaltungen:
- CH-A- 342 442
- DE-A- 3 517 165
- DE-A- 3 517 194
- US-A- 3 635 114

## Beschreibung

Die Erfindung bezieht sich auf eine Maschine zum Anleimen eines bandförmigen, von einem Vorrat abzuziehenden Kantenmaterials an die Schmalseiten plattenförmiger Werkstücke, wie plattenförmiger Möbelelemente.

Eine solche Maschine hat einen Bearbeitungsplatz, an dem die Werkstücke festspannbar sind, und eine in Höhe der Werkstück-Schmalseiten mit ihrer Achse senkrecht zu der Werkstückebene angeordnete Druckrolle, an die das Kantenmaterial mit einer Klebschicht an der abliegenden Seite angegeben und durch die dieses Material an die Werkstück-Schmalseite angedrückt wird. Hierbei ist die Druckrolle an einem über dem Bearbeitungsplatz in einer zu den festgespannten Werkstücken parallelen Ebene verfahrbaren Kreuzsupport angeordnet, an dem Vorrichtungen zur Aufnahme und Führung des Kantenmaterials angeordnet sind.

Eine derartige Maschine wird dann verwendet, wenn die Werkstückkanten einen unregelmäßigen Verlauf haben, beispielsweise kreisrund, oval, mit Einbuchtungen versehen sind oder gesoftete Ecken haben. Bei Werkstücken mit rechtwinklig zueinander stehenden, geradlinigen Kanten wird der Auftrag des Kantenmaterials üblicherweise im Durchlaufverfahren vorgenommen, was für die vorliegende Erfindung nicht weiter interessiert.

Aus der DE-35 17 194-A1 ist eine Kantenanleimmaschine der eingangs genannten Art bekannt, bei der der Bearbeitungsplatz, an dem die Werkstücke festgespannt werden, durch einen Drehtisch gebildet ist. Unter Einsatz geeigneter Krafthilfsmittel hält der Kreuzsupport die Druckrolle in der Anlage an der Werkstückkante, die sich durch Drehen des Werkstücks auf dem Drehtisch an der Druckrolle vorbeibewegt und dort das bandförmige Kantenmaterial aufnimmt. An einem weiteren Support, der mit dem Kreuzsupport mit der Druckrolle über ein Portal verbunden sein kann, hat man bei der bekannten Kantenanleimmaschine ein Fräsaggregat vorgesehen, mit dem das über die Kanten der Werkstückschmalseiten vorstehende Kantenmaterial abgetrennt wird, also ein Bündigfräsen des Kantenmaterials möglich ist.

Eine solche Kantenanleimmaschine ist für den Einsatz einer NC-Steuerung nicht geeignet, weil bezogen auf das Werkstück, das am Bearbeitungsplatz festgespannt wird, eine Bearbeitungsebene vorzugeben ist, in der mittels zweier Maschinenachsen jeder beliebige Punkt anfahrbar sein muß. Bei einer undefinierten Ausgangsposition der Werkstücke und der Pendelbewegung des Tragarms der Druckrolle, die dem Kantenverlauf nachfolgt, ist eine NC-Steuerung nicht einsetzbar.

Zum anderen sind Kantenformatfräsmaschinen bekannt, auf denen Werkstücke mit unregelmäßigem Umfang entlang ihrer Schmalseiten befräst werden können. Diese Maschinen haben einen das Fräswerkzeug tragenden Support, der zumindest in der Richtung zweier Achsen, üblicherweise in der X-Y-Ebene eines Bearbeitungsplatzes beliebig verfahrbar ist. Solche Formatfräsmaschinen dieser Art waren jedoch bislang nicht geeignet, zusätzlich auch den Kantenauftrag bei den zu bearbeitenden plattenförmigen Werkstücken vorzunehmen.

Der Erfindung liegt deshalb die Aufgabe zugrunde, eine Kantenanleimmaschine der eingangs genannten Art zu schaffen, bei der eine Zweiachsensteuerung des Andruckwerkzeugs möglich ist und die folglich zugleich auch NC-gesteuerte Formatfräsmaschine für die an den Werkstückkanten anzubringende Kontur sein kann.

Diese Aufgabe wird bei einer Kantenanleimmaschine der gattungsbildenden Art dadurch gelöst, daß der Bearbeitungsplatz mit den jeweils festgespannten Werkstücken ortsfest ist und der Kreuzsupport zu gleich Teil einer Kantenformatfräsmaschine ist, der aus einem in Längsrichtung (X-Richtung) des Bearbeitungsplatzes verfahrbaren Schlitten und aus einem daran quer zur Längsrichtung (Y-Richtung) des Bearbeitungsplatzes verfahrbaren Ausleger besteht, an dem die Druckrolle mit ihrer Achse senkrecht zur Verfahrebene des Kreuzsupports und ein oder mehrere Fräsaggregate angeordnet sind.

Der besondere Vorteil einer erfindungsgemäßen Kantenanleimmaschine liegt darin, daß die Druckrolle ganz oder zumindest teilweise entlang des Umfanges des auf dem Bearbeitungstisch feststehenden Werk stücks herumgeführt werden kann. Dies ermöglicht der in Richtung zweier Achsen verfahrbare Kreuzsupport, wobei die beiden Achsen zweckmäßig zwei senkrecht aufeinander stehende Koordinatenachsen sind. Da somit die neue Maschine hinsichtlich der Führung des Andruckwerkzeugs die gleichen Funktionen wie eine Fräsmaschine für das Formatfräsen plattenförmiger Werkstücke hat, die hierbei im Umlauf um die Kanten herum bearbeitet werden, liegt ihr weiterer besonderer Vorteil darin, mittels der am Kreuzsupport an geordneten Fräsaggregate das Formatfräsen der Werkstückkanten vornehmen zu können. Somit hat die erfindungsgemäße Maschine die Doppelfunktion einer Kantenanleim- und einer Fräsmaschine. Für diese beiden Funktionen kann die für den jeweils vorangehen den Fräsvorgang erstellte NC-Steuerung mit einem entsprechenden Ergänzungsprogramm für den Kantenanleimvorgang verwendet werden.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine schematische Draufsicht auf eine Fräs- und Kantenanleimmaschine,
- Fig. 2: einen Teilschnitt durch die Maschine gemäß Figur 1 entlang der Linie A-A,
- Figur 3: eine Ansicht der Maschine aus Richtung X in Figur 2,
- Figur 4: eine schematische Draufsicht auf den Bearbeitungsplatz der Maschine,
- Figur 5: eine weitere schematische Draufsicht auf den Bearbeitungsplatz der Maschine in vergrößerter Darstellung,
- Figur 6: eine perspektivische Ansicht des Eckbereichs eines mit der Maschine bearbeiteten Werkstücks,
- Figur 7: einen Schnitt durch die Stanzvorrichtung der Maschine entsprechend der Einzelheit Y entlang der Linie B-B in Figur 5,
- Figur 8: eine Ansicht der Stanzvorrichtung der Maschine aus Richtung Z in Figur 7.

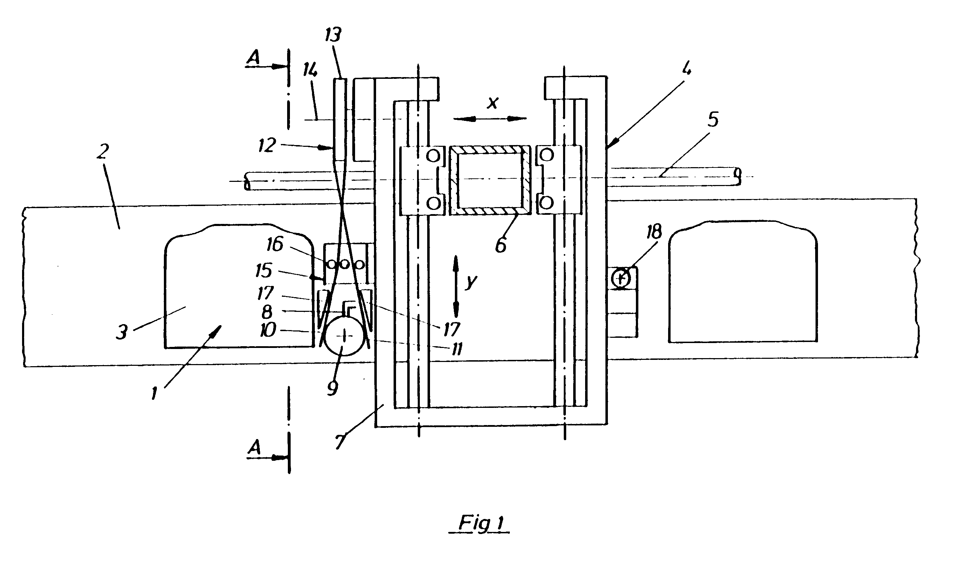

Im einzelnen erkennt man in Figur 1 einen Bearbeitungsplatz 1, der auf einem Tisch 2, einem Transportband oder dergleichen angeordnet ist. An diesem Bearbeitungsplatz 1 sind durch in Figur 1 nicht näher dargestellte Vorrichtungen plattenförmige Werkstücke 3 festspannbar, auf deren Schmalseiten oder Umfangskanten ein Kantenmaterial in Gestalt eines Streifens oder Bandes auftragbar ist, das an der Kontaktseite in der Regel mit einer aktivierbaren Klebschicht ausgestattet ist. Zumindest eine der Schmalseiten des Werkstückes, auf die das Kantenmaterial aufgetragen werden soll, hat einen unregelmäßigen Verlauf, ist also nicht geradlinig ausgebildet.

Über den Bearbeitungsplatz 1 hinweg ist ein Support 4 verfahrbar, der sowohl in Längsrichtung des Bearbeitungsplatzes 1, hier in der X-Richtung, als auch senkrecht dazu, folglich in der Y-Richtung, bewegbar ist. Der Support 4 umfaßt einen Schlitten 6 der entlang einer in X-Richtung liegenden Führung verschiebbar ist, und er besitzt ferner einen oberhalb des Bearbeitungsplatzes 1 verfahrbaren Ausleger 7 der in Querrichtung des Bearbeitungsplatzes 1, also in Y-Richtung, verfahren werden kann. Entsprechend den plattenförmigen WErkstücken 3 bildet die Aufspannseite des Bearbeitungsplatzes 1 eine Ebene, zu der die X--Y-Ebene der Maschine und entsprechend der Ausleger 7 parallel sind. Eine Verfahrbarkeit des Auslegers 7 kann senkrecht zu der X-Y-Ebene zusätzlich vorgesehen sein.

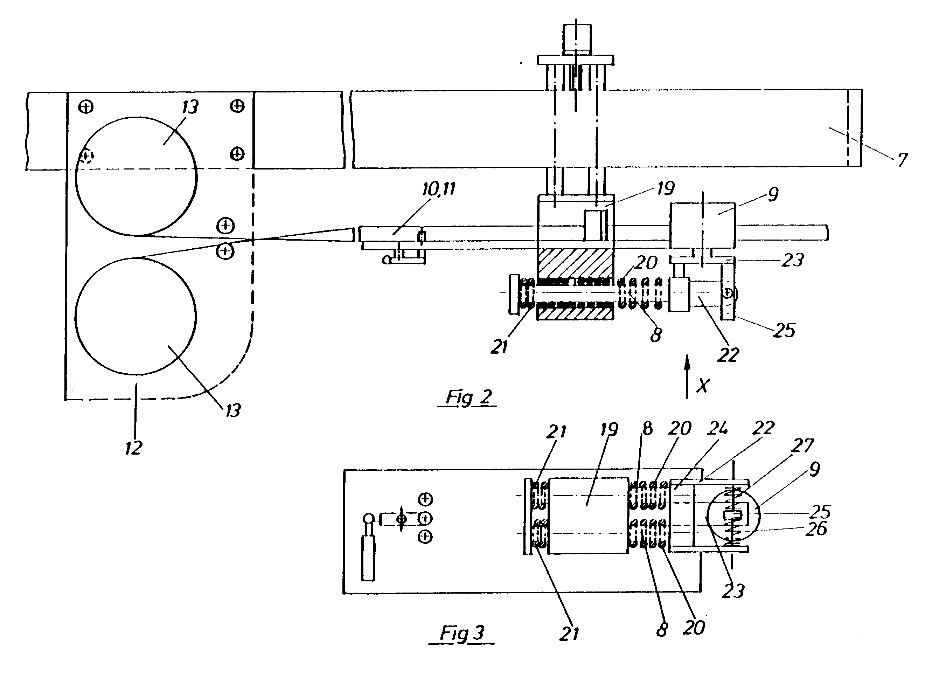

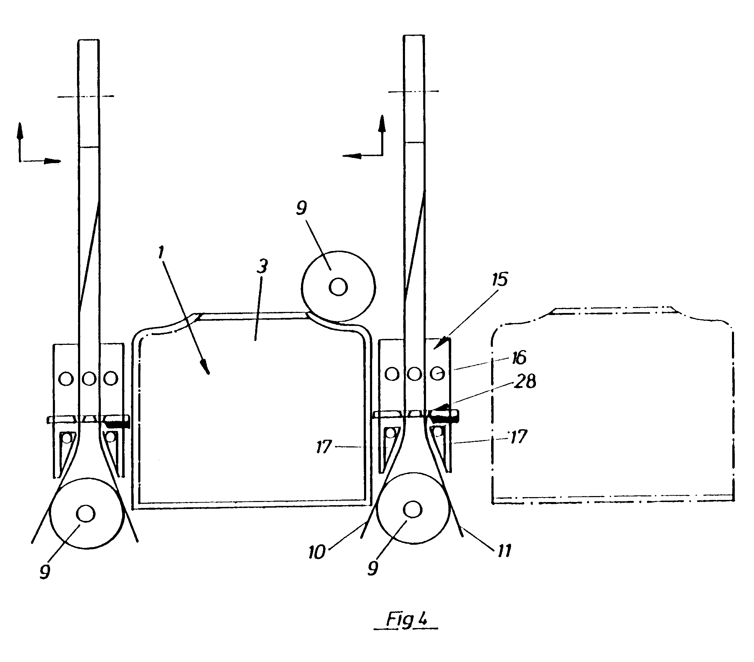

An der einen Außenseite des Auslegers 7 sitzt ein vorstehender Tragarm 8, an dem eine Druckrolle 9 gelagert ist. Tangential sind an die Druckrolle 9 zwei Streifen oder Bänder 10, 11 eines Kantenmaterials herangeführt, die von Spulen 13 einer Aufnahmevorrichtung abgezogen werden. Die Aufnahmevorrichtung 12 sitzt ebenfalls an der Außenseite des Auslegers und ist in Y-Richtung gesehen etwa in gleicher Höhe hinter der Andruckrolle 9 angeordnet, was Figur 2 deutlicher wiedergibt. Somit verlaufen die zu der Druckrolle 9 hingeführten Bänder 10, 11, des Kantenmaterials etwa in Y-Richtung, wobei in der in Figur 1 wiedergegebenen Ausgangslage der Druckrolle 9 die Berührungsstelle zwischen der Druckrolle 9 und dem Band 10 zur Mitte des Bearbeitungsplatzes 1 hinliegt. Die Druckrolle 9 kann eine zweite Ausgangslage haben, die in Figur 4 links dargestellt ist, hierbei liegt dann die Berührungsstelle zwischen dem zweiten Band 11 des Kantenmaterials und der Druckrolle 9 zur Mitte des Bearbeitungsplatzes 1 hin.

Die Spulen 13 des Kantenmaterials sind in der Aufnahme-vorrichtung 12 so angeordnet, daß ihre Achsen 14 parallel zur X-Richtung liegen. Daher müssen die Bänder 10 and 11 auf ihrem Weg zur Druckrolle 9 in einer Führungsvorrichtung 15 aufgerichtet werden. Dazu besitzt die Führungsvorrichtung 15 aufrechtstehende Führungselemente 16, wie Rollen, zwischen denen die Bänder 10 und 11 des Kantenmaterials hindurchgeführt sind.

Zwischen der Führungsvorrichtung 15 und der Druckrolle 9 erkennt man ferner noch Heißluftausströmer 17, welche auf die jeweils von der Druckrolle 9 abliegende Seite der Bänder 10, 11 gerichtet sind und für den Anleimvorgang einen auf dieser Seite der Bänder angebrachten Heißkleber aktivieren können.

Die gesamte Maschine, wie sie in Figur 1 erkennbar ist, ist zugleich auch Fräsmaschine und besitzt auf der der Kantenanleimmaschine abgelegenen Seite des Auslegers 7 ein oder mehrere Fräsaggregate 18, mit denen unterAusnutzung der gleichen NC-Steuerung der Maschine in einem vorherigen Arbeitsgang die zu besäumenden Kanten der Werkstücke gefräst werden können. Dies kann an einem zweiten Bearbeitungsplatz geschehen, über den der Support 4 ebenfalls verfahrbar ist. Dieser zweite Bearbeitungsplatz ist in Figur 1 rechts angedeutet.

Die Figuren 2 und 3 veranschaulichen die Aufhängung der Druckrolle 9 und ihrer Verbindung mit dem Ausleger 7. An diesem ist ein Führungsstück 19 befestigt, in dem der Tragarm 8 der Druckrolle 9 in Y-Richtung verschieblich gelagert ist. In dieser Richtung wird der Tragarm 8 in einer O-Lage fixiert, dazu sitzen auf dem Tragarm 8 zwei Druckfedern 20 und 21, die sich endseitig am Tragarm 8 und mittig an dem Führungsstück 19 abstützen. Aus der O-Lage in Y-Richtung kann die Andruckrolle 9 also nur unter Überwindung der von den Federn 20 und 21 aufgebrachten Gegenkräfte herausbewegt werden.

Am Vorderende des Tragarms 8 sitzt eine Gabel 22 an deren Rücken 24 ein Pendelelement 23 gelagert ist, dessen Schwenkachse senkrecht zur X-Y-Ebene steht. Das Pendelelement 23 trägt an seinem Ende die mit ihrer Achse senkrecht zur X-Y-Ebene stehende Druckrolle 9, die in die beiden Richtungen der X-Achse ebenfalls federnd nachgeben kann. Dazu ist am Ende des Pendelelementes 23 eine zwischen die Zinken der Gabel 22 nach unten reichende Zunge 25 angeordnet, an der zwei in X-Richtung liegende Druckfedern 26 und 27 koaxial zueinander von beiden Seiten her angreifen. Mit ihren anderen Enden stützen sich die Druckfedern 26 und 27 an den Zinken der Gabel 22 ab, wodurch die Zunge 25 und damit das Pendelelement 23, solange die Druckrolle 9 nicht beaufschlagt ist, in einer Mittellage bezogen auf die X-Richtung fixiert werden. Die Federn 26 und 27 einerseits sowie die Federn 20 und 21 andererseits bedingen eine gewisse Nachgiebigkeit der Druckrolle 9 in jeder beliebigen Richtung der X-Y-Ebene. Wie Figur 3 noch weiter veranschaulicht, kann auch ein doppelter Tragarm 8 verwendet werden, um Verkantungen zu verhindern.

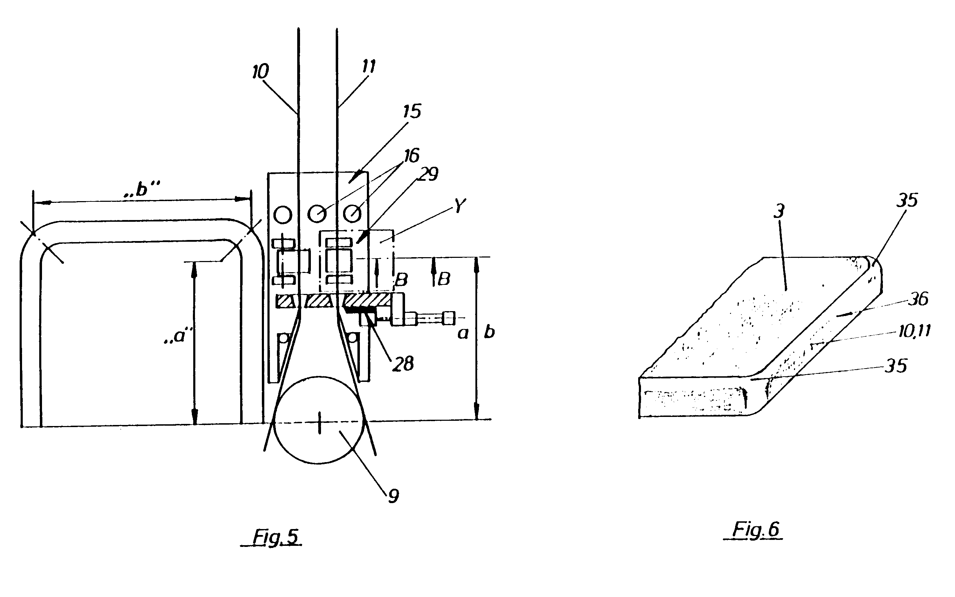

In den Figuren 4 und 5 erkennt man ein weiteres Detail der Kantenanleimvorrichtung zwischen der Führungsvorrichtung 15 und der Druckrolle 9. Dort befindet sich nämlich eine Kappvorrichtung 28, mit der die Bänder 10 und 11 des Kantenmaterials abgeschnitten werden können. Dies ist am Ende jedes Beschichtungsvorganges erforderlich. Danach wird das Kantenmaterial dann wieder tangential an die Druckrolle 9 herangeführt, was automatisch beim Rückstellen der Druckrolle 9 in die Ausgangslage geschehen kann. Es versteht sich, daß jedes der beiden Bänder 10 und 11 des Kantenmaterials für sich durchtrennt werden kann, entsprechend besitzt die Kappvorrichtung 28 zwei voneinander getrennt betätigende Schneidvorrichtungen.

Weiter veranschaulicht Figur 4 wie die Druckrolle 9 an der unteren rechten Ecke und an der unteren linken Ecke des auf dem Bearbeitungsplatz 1 liegenden Werkstücks 3 ihre Ausgangsposition einnehmen kann. Ausgehend von der Ausgangslage an der unteren rechten Ecke des Werkstücks 3 bei dem das an der linken Seite der Druckrolle 9 vorbeigeführte Band 10 des Kantenmaterials zum Werkstück 3 hinliegt, wird unter Abzug des Bandes 10 die benachbarte, in Y-Richtung liegende Kante abgefahren, wonach dann in einem Arbeitsgang die rechte obere Ecke des Werkstücks 3 und die sich daran anschließende Einbuchtung von der Druckrolle 9 durchfahren wird. Da bei dem hier gezeigten Ausführungsbeispiel die geraden, in X-Richtung liegenden Kantenabschnitte des Werkstückes 3 nicht beschichtet werden brauchen, beendet die Druckrolle 9 in der rechts oberhalb des Werkstückes 3 gezeigten Position ihren ersten Bearbeitungsgang, wozu zuvor die Kappvorrichtung 28 das Band 10 passend abgetrennt hat. Danach wird über die NC-Steuerung die Druckrolle 9 in ihre zweite Ausgangslage an der linken unteren Ecke des Werkstückes 3 verfahren, in der dann das rechts an die Druckrolle 9 herangeführte Band 11 des Kantenmaterials dem Werkstück 3 benachbart ist. Von hier aus wird dann, da das Werkstück 3 spiegelsymetrisch zur in Y-Richtung liegenden Mittenachse ist, ein spiegelbildlicher Weg entlang der zweiten, zu beschichtenden Kante des Werkstücks 3 abgefahren, wobei das Material des zweiten Bandes 11 auf die Werkstückkante aufgetragen wird.Die Angabe zweier Bänder tangential an beide Seiten der Druckrolle erübrigt es, das Anleimaggregat zu wenden, wenn - wie vorstehend beschrieben - zwei gegenüberliegende Werkstückseiten unabhängig voneinander, jeweils nach Abschneiden des Bandes beschichtet werden sollen.

Sofern eine Unterbrechung der aufzutragenden Kante nicht erforderlich ist, kann die Druckrolle 9 ausgehend von einer der beiden geschilderten Ausgangslagen die beiden in Y-Richtung liegenden Kanten und die obere in X-Richtung verlaufende Kante des Werkstücks 3 auch in einem Arbeitsgang umfahren, womit man dann sogar mit lediglich einem einzigen Band des Kantenmaterials auskommt, das an jeder Ecke des Werkstücks 3 dann den Umschlingungsbereich der Druckrolle 9 entsprechend vergrößert.

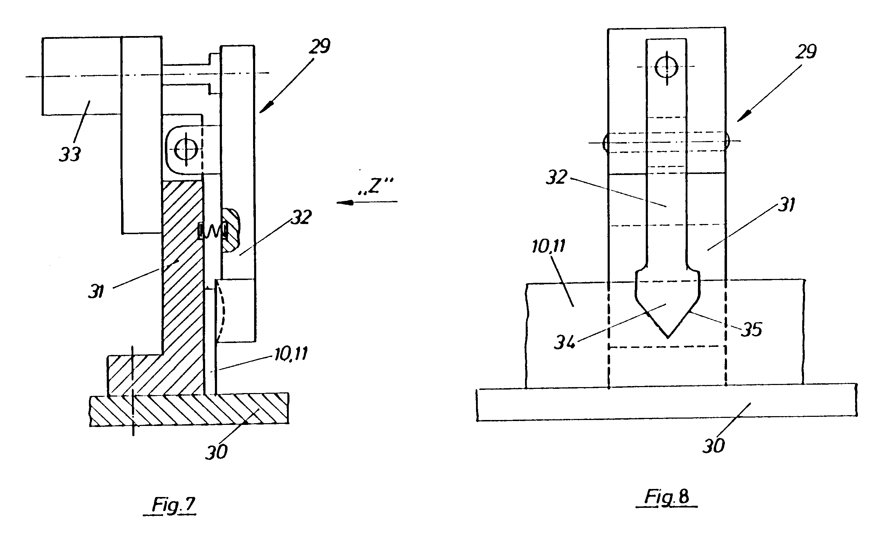

Figur 5 zeigt weiter eine Stanzvorrichtung 29, deren Einzelheiten in den Figuren 7 und 8 wiedergegeben ist. Sie besteht aus einer auf einer Grundplatte 30, auf der auch die Führungsvorrichtung 15 angeordnet sein kann, aufrecht aufgebauten Gestellplatte 31, die eine Matrize bildet. An dieser Matrize 31 läuft das betreffende Band 10, 11 des Kantenmaterials aufrecht vorbei und passiert eine Stanzwippe 32, die eine etwa dreieckförmige Schneide 34 hat, welche vom Rand aus bis etwa zur Hälfte des Bandes 10, 11 reicht. Die Stanzwippe 32 wird von einer Zylindereinheit 33 angetrieben und bei Betätigung so gegen die Matrize 31 gedrückt, daß aus dem betreffenden Band 10, 11 ein in der Konfiguration der Schneide 34 der Stanzwippe 32 entsprechende dreieckförmige Ausklinkung 35 ausgestanzt wird. Statt der Stanzwippe 32 kann auch ein in anderer Weise gelagertes Stanzmesser verwendet werden, daß eine entsprechende Ausklinkung aus dem bandförmigen Kantenmaterial ausstanzt.

Wie Figur 5 weiter deutlich macht, werden die Ausklinkungen 35 an vorberechnten Stellen der Bänder 10, 11 angebracht, die nach dem Auftragen auf die Kanten des Werkstücks 3 an denjenigen Stellen liegen, an denen sich ohne die Ausklink ungen 35 eine Stauchung des Materials des Bandes 10, 11 ergeben würde. Dies ist insbesondere an den Ecken solcher Werkstücke der Fall, die gesoftete Kanten haben, bei denen also nicht nur ein senkrecht zur Plattenebene des Werkstückes liegender Kantenabschnitt sondern zugleich auch ein auf die Plattenebene auslaufender geneigter oder gerundeter Kantenabschnitt in Querschnitt gesehen zu beschichten ist.

Ein solches Werkstück 3 mit einer gesofteten Kante 36, die zu beschichten ist, zeigt Figur 6. Man erkennt dort, daß an den Werkstückecken in dem Bereich der Kantenbeschichtung, der zur Horizontalebene der Platte hin geneigt ist, die Ausklingungen 35 sich zu einer Stoßfuge zusammenziehen, durch die eine Faltenbildung des Kantenmaterials an diesen Eckstellen vermieden ist. Die Streckenabschnitte bis zu den Ausklingungen 35 der Bänder 10, 11 hin sind in Figur 5 mit "a" und "b" besonders gekennzeichnet.

In der Zeichnung ist der Bearbeitungsplatz 1 lediglich schematisch angedeutet. In besonderer Ausführung kann der Bearbeitungsplatz 1 aus einem Drehtisch bestehen, auf dem die Werkstücke 3 so festgespannt werden, daß sie entlang ihres Randes von der Druckrolle 9 beaufschlagt werden können. Die Zweiachsenbewegung der Druckrolle 9 und des Drehtisches können nun so aufeinander abgestimmt werden, daß die Druckrolle von einer Ausgangsposition sämtliche Kanten der Werkstücke erreichen kann, was beispielsweise dadurch möglich ist, daß nach einem ersten Bearbeitungsvorgang mittels der Druckrolle 9 der Drehtisch um 90° oder um 180° mit dem Werkstück verschwenkt wird. Dreh Drehtisch kann es erübrigen, zwei getrennte Ausgangspunkte für den Beginn des Kantenauftrags und entsprechend den Verfahreweg der Druckrolle 9 festzulegen.

## Patentansprüche

1. Maschine zum Anleimen eines bandförmigen, von einem Vorrat abzuziehenden Kantenmaterials (10,11) an die Schmalseiten plattenförmiger Werkstücke (3), wie plattenförmiger Möbelelemente, mit einem Bearbeitungsplatz (1), an dem die Werkstücke (3) festspannbar sind, und mit einer in Höhe der Werkstück-Schmalseiten mit ihrer Achse senkrecht zu der Werkstückebene angeordneten Druckrolle (9), an die das Kantenmaterial (10, 11) mit einer Klebschicht an der abliegenden Seite angegeben und durch die dieses Material an die Werkstückschmalseite angedrückt wird, wobei die Druckrolle (9) an einem über dem Bearbeitungsplatz (1) in einer zu den festgespannten Werkstücken parallelen Ebene verfahrbaren Kreuzsupport (4) angeordnet ist, an dem Vorrichtungen zur Aufnahme und Führung des Kantenmaterials (10, 11) angeordnet sind,
dadurch gekennzeichnet,
daß der Bearbeitungsplatz (1) mit den jeweils festgespannten Werkstücken (3) ortsfest ist und der Kreuzsupport (4) zugleich Teil einer Kantenformatfräsmaschine ist, der aus einem in Längsrichtung (X-Richtung) des Bearbeitungsplatzes (1) verfahrbaren Schlitten (6) und aus einem daran quer zur Längsrichtung (Y-Richtung) des Bearbeitungsplatzes (1) verfahrbaren Ausleger (7) besteht, an dem die Druckrolle (9) mit ihrer Achse senkrecht zur Verfahrebene des Kreuzsupports (4) und ein oder mehrere Fräsaggregate (18) angeordnet sind.

2. Maschine nach Anspruch 1,
dadurch gekennzeichnet,
daß die Ausgangsposition des Auslegers (7) an einer der beiden Querseiten des Bearbeitungsplatzes (1) liegt und das Kantenmaterial (10, 11) an der in der Ausgangslage zur Mitte des Bearbeitungsplatzes (1) hin liegenden Seite tangential an die Druckrolle (9) herangeführt ist.

3. Maschine nach Anspruch 1 oder 2,
dadurch gekennzeichnet,
daß die Ausgangsposition des Auslegers (7) an beiden Querseiten des Bearbeitungsplatzes (1) liegt und zwei Bänder (10, 11) des Kantenmaterials im wesentlichen in Querrichtung zum Bearbeitungsplatz (1) beidseits tangential an die Druckrolle (9) herangeführt sind.

4. Maschine nach einem der Ansprüche 1 - 3,
dadurch gekennzeichnet,
daß die Druckrolle (9) an einer Außenseite des Auslegers (7) angeordnet ist, an der sich die Aufnahmevorrichtung (12) und die Führungsvorrichtung (15) des Kantenmaterials (10, 11) im wesentlichen in Y-Richtung hintereinanderliegend befinden.

5. Maschine nach Anspruch 4,
dadurch gekennzeichnet,
daß die Aufnahmevorrichtung (12) Materialspulen (13) aufnimmt, deren Achsen (14) parallel zur X-Richtung liegen und die Führungsvorrichtung (15) Aufrichtelemente (16) für das Kantenmaterial (10, 11) besitzt.

6. Maschine nach einem der Ansprüche 1 - 5,
dadurch gekennzeichnet,
daß die Druckrolle 9 an einem Lagerarm (8) angeordnet ist, der in einem mit dem Ausleger (7) verbundenen Führungssteg (19) in Y-Richtung gegen die Kräfte von Federn (20, 21) verschieblich ist, die den Lagerarm (8) ohne Druckbeaufschlagung durch die Druckrolle (9) in einer O-Stellung fixieren.

7. Maschine nach Anspruch 6,
dadurch gekennzeichnet,
daß die Druckrolle (9) am Ende des Tragarms (8) an einem Pendelelement (23) gelagert ist, das im wesentlichen gegen die Kräfte von Zentrierfedern (26, 27) beidseits in X-Richtung verschieblich ist.

8. Maschine nach einem der Ansprüche 1 - 7,
dadurch gekennzeichnet,
daß zwischen der Führungsvorrichtung (15) und der Druckrolle (9) eine Kappvorrichtung (28) für jedes Materialband (10, 11) angeordnet ist.

9. Maschine nach einem der Ansprüche 1 - 8,
dadurch gekennzeichnet,
daß an dem Ausleger (7) des Kreuzsupports (4) im Abstand vor der Druckrolle (9) eine Stanzvorrich tung (29) für jedes Materialband (10, 11) angeordnet ist, die an denjenigen Stellen des Materialbandes (10, 11), die auf solche Werkstück-Schmalseitenstellen aufgebracht werden, an denen sich eine Materialstauchung ergibt, eine entspre chende Ausklinkung (35) vornimmt.

10. Maschine nach Anspruch 9,
dadurch gekennzeichnet,
daß die Stanzvorrichtung (29) eine Matrize (31) hat, an der anliegend das Materialband (10, 11) unter der Schneide (34) einer Stanzwippe (32) vorbeigeführt ist, die an oder neben der Matrize (31) gelagert ist.

11. Maschine nach einem der Ansprüche 1 - 10,
dadurch gekennzeichnet,
daß der Bearbeitungsplatz (1) aus einem ortsfest gelagerten Drehtisch besteht, dessen Rotationsachse parallel zur Achse der Druckrolle (9) ist.

## Claims

1. Machine for gluing a strip-like edging material (10,11) leading off from a supply onto the narrow sides of plate-like workpieces (3), such as plate-like furniture elements, with a processing station (1) where the workpieces (3) can be clamped, and with a pressure roller (9) which is mounted level with the narrow side of the workpiece with its axis perpendicular to the plane of the workpiece whereby the edging material (10,11) is placed against the roller with an adhesive layer on the remote side and this edging material is pressed against the narrow side of the workpiece through the pressure roller, wherein this pressure roller (9) is mounted on a cross support (4) which can be moved over the processing station (1) in a plane parallel to the clamped workpieces and wherein the cross support is provided with devices for holding and guiding the edging material (10,11)
characterised in that
the processing station (1) is locally fixed with the workpieces (3) firmly clamped and the cross support (4) is at the same time part of an edging format milling machine which consists of a slide carriage (6) movable in the longitudinal direction (X-direction) of the processing station (1) and of a jib arm (7) which can be moved thereon across the longitudinal direction (Y-direction) of the processing station whereby the jib arm supports the pressure roller (9) with its axis perpendicular to the travel plane of the cross support (4) , and one or more milling units (18).

2. Machine according to claim 1
characterised in that the starting position of the jib arm (7) lies on one of the two cross sides of the processing station (1) and the edging material (10,11) is moved tangentially against the pressure roller (9) on the side lying towards the centre of the processing station (1) in the starting position.

3. Machine according to claim 1 or 2
characterised in that the starting position of the jib arm (7) lies on both cross sides of the processing station (1) and two strips (10,11) of edging material are moved tangentially either side against the pressure roller (9) substantially in the transverse direction to the processing station (1).

4. Machine according to one of claims 1 - 3
characterised in that the pressure roller (9) is mounted on an outer side of the jib arm (7) on which the pick-up device (12) and guide device (15) for the edging material (10,11) are mounted one behind the other substantially in the Y-direction.

5. Machine according to claim 4
characterised in that the pick-up device (12) holds material spools (13) whose axes (14) lie parallel to the X-direction and the guide device (15) has alignment elements (16) for the edging material (10,11).

6. Machine according to one of claims 1 - 5
characterised in that the pressure roller (9) is mounted on a bearing arm (8) which is displaceable in the Y-direction in a guide web (19) connected to the jib arm (7) against the forces of springs (20,21) which fix the bearing arm (8) in an O-position without pressure through the pressure roller (9).

7. Machine according to claim 6
characterised in that the pressure roller (9) is mounted at the end of the support arm (8) on a pendulum element (23) which is displaceable both sides in the X-direction substantially against the forces of centring springs (26,27).

8. Machine according to one of claims 1 - 7
characterised in that a capping device (28) for each material strip (10,11) is mounted between the guide device (15) and the pressure roller (9).

9. Machine according to one of claims 1 - 8
characterised in that a punch device (29) for each material strip (10,11) is mounted on the jib arm (7) of the cross support (4) at a distance in front of the pressure roller (9) and produces a suitable release (35) at those areas of the material strip (10,11) which are applied to those areas of the narrow sides of the workpiece where the material is compressed.

10. Machine according to claim 9
characterised in that the punch device (29) has a matrix (31) which the material strip (10,11) passes by underneath the cutter (34) of a punching arm (32) which is mounted on or next to the matrix (31).

11. Machine according to one of claims 1 - 10.
characterised in that the processing station (1) consists of a locally fixed revolving platform the rotation axis of which is parallel to the axis of the pressure roller (9).

## Revendications

1. Machine de collage de bordures en provenance d'un stock (10, 11) sur les chants de pièces à usiner en forme de panneaux (3), par exemple: éléments de meubles, avec un poste d'usinage (1), où les pièces à usiner (3) peuvent être bloquées, et avec un rouleau de pression (9), à axe perpendiculaire au plan de la pièce à usiner, disposé à hauteur du chant de celle-ci, lequel presse, sur le chant de la pièce à usiner, la bordure (10, 11) pourvue sur la face opposée d'une couche de colle, le rouleau de pression (9) étant monté à un support en croix (4), déplaçable au-dessus du poste d'usinage, parallèlement aux pièces à usiner blo-quées, et équipé de dispositifs de réception et de guidage de la bordure (10, 11),
caractérisée par le fait
que le poste d'usinage (1), avec les pièces à usiner (3) y respectivement fixées, est stationnaire et que le support en croix (4) fait simultanément partie d'une fraiseuse-formateuse et est composé d'un chariot (6), mobile dans le sens longitudinal (direction x) du poste d'usinage (1), et d'un bras (7), mobile transversalement (direction Y) au sens longitudinal du poste d'usinage (1) et qui est équipé du rouleau de pression (9), dont l'axe est perpendiculaire au plan de déplacement du support en croix (4), ainsi que d'un ou plusieurs ensembles de fraisage (18).

2. Machine selon revendication 1
caractérisée par le fait
que la position de départ du bras (7) est située sur l'un des deux côtés transversaux du poste d'usinage (1) et que la bande de revêtement (10, 11) est conduite tangentiellement au rouleau de pression (9), du côté situé, en position de départ, au milieu du poste d'usinage (1).

3. Machine selon revendication 1 ou 2,
caractérisée par le fait
que la position de départ du bras (7) est située des deux côtés transversaux du poste d'usinage (1) et que deux bordures (10, 11) sont conduites, tangentiellement, des deux côtés, au rouleau de pression (9), essentiellement en sens transversal par rapport au poste d'usinage (1).

4. Machine selon l'une des revendication 1 à 3,
caractérisée par le fait
que le rouleau de pression (9) est monté sur le côté externe du bras (7), côté duquel le dispositif de réception (12) et le dispositif de guidage (15) de la bande de revêtement (10, 11) sont disposés, l'un derrière l'autre, essentiellement en sens Y.

5. Machine selon revendication 4,
caractérisée par le fait
que le dispositif de réception (12) accueille les rouleaux dévideurs (13) de bordure, dont les axes (14) sont disposés parallèlement à la direction X, et que le dispositif de guidage (15) est équipé d'éléments de redressement (16) pour la bordure (10, 11).

6. Machine selon l'une des revendication 1 à 5,
caractérisé par le fait
que le rouleau de pression (9) est disposé sur un support (8), déplacable en direction X, dans un pont de guidage (19), relié au bras (7), contre les forces de ressorts (20, 21), qui fixent le support (8) dans une position O sans pression de la part du rouleau de pression (9).

7. Machine selon revendication 6,
caractérisée par le fait
que le rouleau de pression (9) est monté, à l'extrémité du support (8) à un élément pendulaire (23), essentiellement déplaçable, des deux côtés, dans le sens X, contre les forces de ressorts de centrage (26, 27).

8. Machine selon l'une des revendications 1 à 7,
caractérisé par le fait
qu'un dispositif de coupe (28) est disposé, pour chaque bordure (10, 11), entre le dispositif de guidage (15) et le rouleau de pression (9).

9. Machine selon l'une des revendications 1 à 8,
caractérisée par le fait
que le bras (7) du support en croix (4) est équipé, à distance du rouleau de pression (9), d'un dispositif de découpage (29), pour chaque bordure (10, 11), lequel effectue une encoche (35) adéquate sur la bordure (10, 11), appliquée sur les chants des pièces à usiner (3), aux endroits présentant des refoulements.

10. Machine selon revendication 9,
caractérisée par le fait
que le dispositif de découpage (29) possède une matrice (31) contre laquelle la bordure (10, 11) est conduite en passant sous la lame (34) d'une bascule estampeuse (32), montée sur ou à côté de la matrice (31).

11. Machine selon l'une des revendications 1 à 10,
caractérisée par le fait
que le poste d'usinage (1) consiste en une table tournante stationnaire, dont le pivot est parallèle à l'axe du rouleau de pression (9).
